# EUROPEAN PATENT SPECIFICATION

(11) **EP 2 330 448 B1**
(45) Date of publication and mention of the grant of the patent: **19.03.2014**
(21) Application number: 09014667.1
(22) Date of filing: 25.11.2009
(51) Int. Cl.: G02B 6/44

(54) **Device for handling a connection point between and excess lengths of optical fibers**
Vorrichtung zur Handhabung eines Verbindungspunkts zwischen Glasfasern und überschüssiger Längen von Glasfasern
Dispositif pour manipuler un point de connexion et longueurs excessives de fibres optiques

(43) Date of publication of application: 08.06.2011
(73) Proprietor: CCS Technology, Inc., Wilmington, DE 19803 (US)
(72) Inventor: Matthies, Jürgen, 58300 Wetter (DE); Grzegorz, Fabrykowski, 95-010 Strykow (PL)
(74) Representative: Sturm, Christoph

(56) References cited:
- US-A- 5 142 661
- US-A- 6 134 185

## Description

The application relates to a device for handling at least one connection point between optical fibers and excess lengths of said optical fibers in accordance with the preamble of claim 1.

When building data transmission networks from optical fibers, it is necessary to interconnect optical fibers and store excess lengths of said optical fibers. The connection points and excess lengths must be handled in fiber optic distribution devices outside buildings and inside buildings. Outside buildings, connection points between optical fibers, and excess lengths thereof, are typically accommodated in fiber optic distribution devices designed as cable sleeves or street distribution cabinets. Inside buildings, connection points between optical fibers, and excess lengths thereof, are typically handled in fiber optic distribution devices designed as distribution cabinets or distribution frames. Fiber optic distribution devices designed as wall boxes can be used both outside buildings and inside buildings.

Fiber optic fiber distribution devices designed as wall boxes are known from the product catalogue entitled "Accessories for fiber optic networks, Edition 1, pages 184 to 187, issue 2001, Corning Cable Systems GmbH & Co. KG". The wall boxes disclosed in this product catalogue comprise a housing and modules, specifically splice cassettes, positioned inside the housing for handling the connection points and excess lengths of optical fibers.

The devices known from the prior art for handling connection points between optical fibers, and excess lengths of the optical fibers, which are also designated as fiber optic distribution devices, are, in particular, only conditionally suitable for so-called FTTH (Fiber-To-The-Home) applications inside a building, in the case of which applications the number of the connection points, which are to be handled, between two fiber optic cables is typically small, since the devices known from prior art have relatively large dimensions. However, what is desired for FTTH applications inside a building are devices for handling connection points between optical fibers, and excess lengths thereof, which have small dimensions and can, for example, be accommodated in narrow cable ducts.

US 6 134 185 A discloses a fiber optic component assembly module, whereby free spaces for guiding optical fibers and for holding the connection point are on front sides of retainers and whereby spools are on the inside.

Starting here from, the present application is based on the problem of providing a novel device for handling at least one connection point between optical fibers and excess lengths of the optical fibers.

This problem is solved by a device according to claim 1.

The device according to the present application for handling fiber connection points between optical fibers and excess lengths thereof is suitable, in particular, for FTTH (Fiber-To-The-Home) applications, since owing to its design said device has small dimensions and can therefore, for example, be installed without a problem in narrow cable ducts inside a building.

Exemplary embodiments emerge from the claims and the following description. The exemplary embodiments are explained in more detail with the aid of the drawings, but are not restricted thereto. In the drawings:
- Figure 1:: shows a device for handling at least one connection point between optical fibers, and excess lengths of the optical fibers, together with two fiber optic cables, in a perspective view;
- Figure 2:: shows the device of Figure 1 with a housing part removed;
- Figure 3:: shows the device of Figure 1 without housing parts;
- Figure 4:: shows the device of Figure 1 without housing parts and without a fiber connection point between the optical fibers;
- Figure 5:: shows a detail of the device of Figure 1;
- Figure 6:: shows a further detail of the device of Figure 1;
- Figure 7:: shows a further detail of the device of Figure 1; and
- Figure 8: shows the detail of Figure 7 together with fiber optic cables.

The present application relates to a device for handling at least one optical fiber connection point between optical fibers, and excess lengths of the connected optical fibers, for use inside buildings, in particular for an FTTH (Fiber-To-The-Home) application.

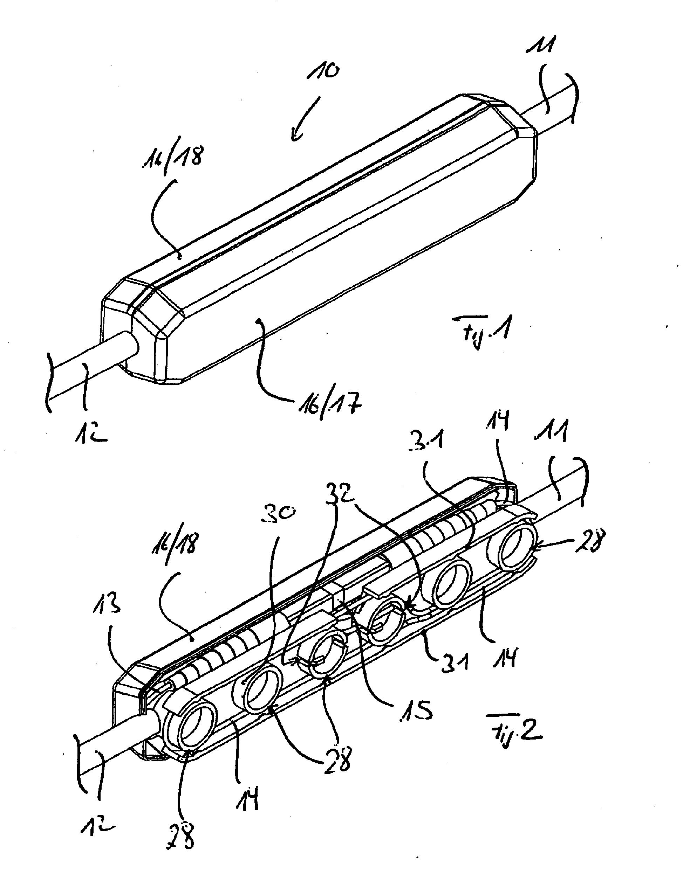

Figures 1 to 4 and 8 show the device 10 and details thereof, in each case together with two fiber optic cables 11, 12, each of the fiber optic cables 11, 12 shown comprising an optical fiber 13 and 14, respectively, in the exemplary embodiment shown.

A fiber connection point 15 is to be formed between the optical fibers 13 and 14 of the two fiber optic cables 11 and 12, the device 10 serving to hold this fiber connection point 15 and to hold excess lengths of the optical fibers 13, 14 connected via the fiber connection point 15.

The device 10 has a housing 16 which is formed in the exemplary embodiment shown by two elongated housing parts 17, 18. The two housing parts 17, 18 are connected together in Figure 1 with the formation of the housing 16.

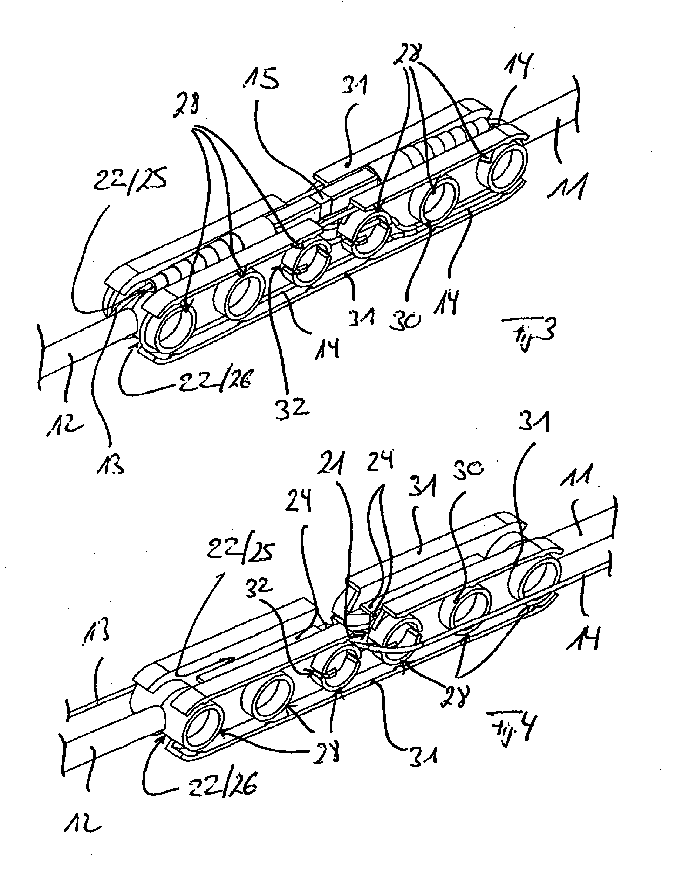

The housing part 17 of the housing 16 is removed in Figure 2, and both housing parts 17 and 18 of the housing 16 are removed in Figure 3.

An excess length store, on the one hand, and a connection point holder, on the other hand, are positioned inside an inner space, bounded by the housing 16, of the device 10, the excess length store serving for handling excess lengths of the optical fibers 13, 14, and the connection point holder serving for handling the fiber connection point 15 between the optical fibers 13, 14.

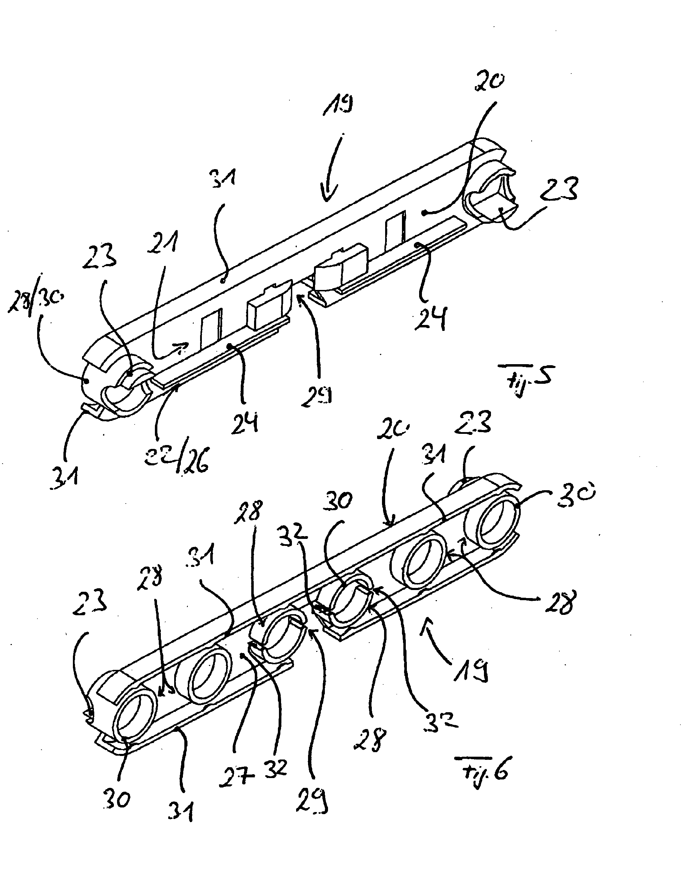

The excess length store and the connection point holder of the device 10 are both formed together from or in common with at least two, or exactly two in the exemplary embodiment shown, management parts 19. The management parts 19 are shown in a separate illustration in Figures 5 and 6.

The management parts 19 are positioned with their rear sides 20 back to back in such a way that, on the one hand, there is a free space 21 for guiding the optical fibers 13 and 14 between the rear sides 20 of the management parts 19 and, on the other hand, there is a free space 22 for holding the fiber connection point 15 between the optical fibers 13, 14.

In accordance with Figures 5 and 6, the management parts 19 have on their rear sides 20 connection elements 23 via which the management parts 19 positioned back to back are joined together, specifically plugged together, with the formation of the free space 21 for guiding the optical fibers, and with formation of the free space 22 for holding the fiber connection point 15 between the optical fibers 13, 14.

The free space 21 for guiding the optical fibers 13, 14, and the free space 22 for holding the fiber connection point 15 are spatially separated from one another via spacers 24 formed on the rear sides 20 of the management parts 19, the free space 22 for holding the fiber connection point 15 enclosing two subspaces 25 and 26 between the optical fibers 13 and 14 in the exemplary embodiment shown.

Seen in a longitudinal direction of the device 10, the subspaces 25 and 26 enclose the free space 21 for guiding the optical fibers 13, 14. One fiber connection point 15 between optical fibers can be respectively held and/or handled in each of the subspaces 25 and 26 of the free space 22.

However, such a fiber connection point 15 is held only in the subspace 25 in the exemplary embodiment shown.

On their front sides 27, the management parts 19 positioned with their rear sides 20 back to back and interconnected via the connection elements 23 respectively have a plurality of drum-like guiding means 28, respectively six such drum-like guiding means 28 in the exemplary embodiment shown. These drum-like guiding means 28 serve for handling excess lengths of the optical fibers 13 and 14. The drum-like guiding means 28 of each management part 19 are positioned next to one another in a row.

As may best be seen in Figures 5 and 6, there is respectively formed between the two middle drum-like guiding means 28 of each management part 19 respectively an opening 29 between the rear side 30 and the front side 27 of the respective management part 19. Starting from the free space 21, formed between the rear sides 20, for guiding the optical fibers 13 and 14, the optical fibers 13 and 14 can be moved over via the openings 29 into the region of the drum-like guiding means 28 formed on the front side 27 of the respective management part 19.

This movement of the optical fibers 13, 14 starting from the free space 21 which is formed between the rear sides 20 of the management parts 19 positioned back to back over into the region of the drum-like guiding elements 28 which are positioned in the region of the front side 27 of the respective management part 19 can best be seen in Figure 4.

Each drum-like guiding means 28 of each management part 19 has a guiding wall 30 of circular cross section or a cylindrical guiding wall 30. Together with side walls 31 formed on the front side 27 of the respective management part 29, these guiding walls 30 define the excess length store of the respective management part 19. The side walls 31 formed on the front side 27 of the respective management part 19 in this case extend along longitudinal sides of the management parts 19, thus parallel to the respective row of guiding means 28 of the respective management part 19. These side walls 31 are interrupted along narrow sides of the management parts 19.

Starting from the respective excess length store of the respective management part 19, the optical fibers 13, 14 can then be moved over via these narrow sides into that subspace 25 of the free space 22 which is formed between the management parts 19 positioned back to back and serves for holding the fiber connection point 15 between the optical fibers 13, 14. This moving over of the optical fibers 13, 14, starting from the excess length store formed on the front side 27 of the respective guiding element 19, into the subspace 25 is shown best by Figures 2 and 3.

In accordance with Figures 2, 3, 4 and 6, the guiding walls 30 of the middle guiding means 28, between which the openings 29 are formed, are respectively interrupted by guiding slots 32 which subdivide the respective guiding wall 30 of the respective guiding means 28 into two segments of identical circumferential extent.

in accordance with Figures 2, 3, an optical fiber 13, 14 can be guided through these guiding slots 32, specifically in order, starting from the free space 21 formed between the rear walls 20 of the management parts 19 positioned back to back, to feed the respective optical fiber 13, 14 to the excess length store of the respective management part 19 in a staged fashion. Minimum bending radii which are to be met can thereby be met for the optical fibers 13, 14 in a controlled fashion.

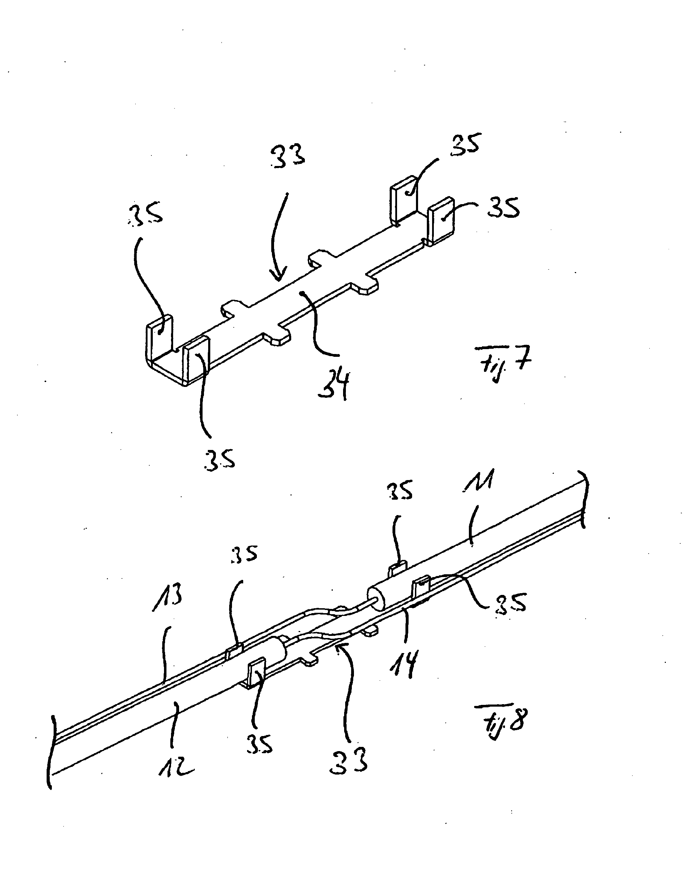

In addition to the housing 16 and the management parts 19 positioned back to back, the device 10 for handling at least one fiber connection point 15 between optical fibers 13 and 14, and excess lengths thereof, has a strain relief element 33. Figure 7 shows this strain relief element 33 in a separate illustration, and said element is shown in Figure 8 together with the fiber optic cables 11 and 12 to be provided with strain relief. In the mounted state of the device 10, the strain relief element 33 is arranged between the management parts 19 positioned back to back, specifically in the free space 21 which is formed between the management parts 19 positioned back to back and serves for guiding the optical fibers 13, 14.

The strain relief element 33 has a plate-like basic body 34, two mutually opposite legs 35 respectively projecting at two mutually opposite ends of the plate-like basic body 34 and being compressed, in order to provide a fiber optic cable 11 or 12 with strain relief, in the direction of the respective fiber optic cable 11 or 12 to be provided with strain relief. In this case, the legs 35 come to bear against the respective cable sheath of the respective fiber optic cable 11 or 12 and clamp it. In accordance with Figure 8, the optical fibers 13, 14 of the fiber optic cables 11, 12 are guided in this case past these legs 35 of the strain relief element 33 such that said optical fibers are not damaged by providing the fiber optic cables 11 and 12 with strain relief.

In particular, a mechanical spliced joint is handled as connection point 15 between the connected optical fibers 13, 14 in the device 10. The optical fibers 13, 14 are, in particular, optical fibers of optimized bending radius.

### List of reference numerals

- 10: device
- 11: fiber optic cable
- 12: fiber optic cable
- 13: optical fiber
- 14: optical fiber
- 15: fiber connection point
- 16: housing
- 17: housing part
- 18: housing part
- 19: management part
- 20: rear side
- 21: free space
- 22: free space
- 23: connection element
- 24: spacer
- 25: subspace
- 26: subspace
- 27: front side
- 28: guiding means
- 29: opening
- 30: guiding wall
- 31: side wall
- 32: guiding slot
- 33: strain relief element
- 34: basic body
- 35: leg

## Claims

1. Device for handling at least one fiber connection point between optical fibers and excess lengths of the optical fibers, having a housing having an excess length store positioned in the housing, and having a connection point holder positioned in the housing, wherein the excess length store and the connection point holder are both formed together from at least two management parts (19), the management parts (19) being positioned with their rear sides (20) back to back, wherein:
a free space (21) is formed between the rear sides (20) of the management parts (19) for guiding optical fibers between the rear sides (20) of the management parts (19),
another free space (22) is formed between the rear sides (20) of the management parts (19) for holding at least one fiber connection point between optical fibers,
the free space (21) for guiding the optical fibers, and the free space (22) for holding the or each fiber connection point are spatially separated from one another via spacers (24) formed on the rear sides (20) of the management parts (19), **characterized in that**
the management parts (19) have on their front sides (27) a plurality of drum-like guiding means (28) for excess lengths of the optical fibers positioned next to one another in a row, there being formed between the two middle drum-like guiding means (28) of at least one management part (19), preferably of each management part, an opening (29) between the front side (27) and the rear side (20) of the respective management part (19) via which the optical fibers can be moved over from the free space (21), formed between the rear sides (20), for guiding optical fibers into the region of the drum-like guiding means (28) formed on the front side (27) of the respective management part (19),
each drum-like guiding means (28) of each management part (19) has circular or cylinder-like guiding walls (30) which, together with side walls (31) formed on the front side of the respective management part (19), define an excess length store of the respective management part (19),
the guiding walls (30) of the two middle drum-like guiding means (28) of at least one management part, preferably of each management part, between which the opening (29) is formed, are interrupted by guiding slots (32) for the optical fibers in order, starting from the free space (21), formed between the rear sides (20), for guiding optical fibers, to feed optical fibers to the excess length store of the respective management part (19) in a staged fashion.

2. Device according to claim 1, **characterized in that** the management parts (19) have on their rear sides (20) connection elements (23) via which the managements parts (19) positioned back to back are connected, specifically with the formation of the free space (21) for guiding the optical fibers, on the one hand, and with formation of the free space (22) for holding the or each fiber connection point between optical fibers, on the other hand.

3. Device according to claim 2, **characterized in that** the connection elements (23) on which the management parts (19) positioned back to back are plugged together.

4. Device according to one of claims 1 to 3, **characterized in that** the free space (22) for holding the or each fiber connection point is subdivided into two subspaces (25, 26) which, seen in a longitudinal direction, enclose the free space (21) for guiding the optical fibers.

5. Device according to one of claims 1 to 4, **characterized in that** the side walls (31) which, together with the guiding walls (30) of the guiding means (28), define the excess length store of the respective management part (19) extend along longitudinal sides of the respective management part (19), and are interrupted along narrow sides of the latter.

6. Device according to claim 5, **characterized in that** the optical fibers can be moved over via the narrow sides, starting from the excess length store formed on the front side of the respective management part, into the free space (22), formed between the rear sides (20), for holding the or each fiber connection point between optical fibers.

7. Device according to one of claims 1 to 6, **characterized by** a strain relief element (33) for fiber optic cables guiding the optical fibers, the strain relief elemeant (33) being arranged between the management parts (19) positioned back to back.

8. Device according to claim 7, **characterized in that** the strain relief element (33) is arranged in the free space (21), formed between the managements parts positioned back to back, for guiding optical fibers.

## Patentansprüche

1. Vorrichtung zur Handhabung mindestens einer Leiterverbindungsstelle zwischen Lichtwellenleitern und Überlängen der Lichtwellenleiter, mit einem Gehäuse mit einem im Gehäuse positionierten Überlängenspeicher und mit einer im Gehäuse positionierten Verbindungsstellenablage, wobei der Überlängenspeicher und die Verbindungsstellenablage beide zusammen von mindestens zwei Aufnahmeelementen (19) gebildet sind, wobei die Aufnahmeelemente (19) mit ihren Rückseiten (20) Rücken an Rücken positioniert sind, wobei zwischen den Rückseiten (20) der Aufnahmeelemente (19) ein Freiraum (21) zur Führung von Lichtwellenleitern zwischen den Rückseiten (20) der Aufnahmeelemente (19) gebildet ist,
ein weiterer Freiraum (22) zum Halten mindestens einer Leiterverbindungsstelle zwischen Lichtwellenleitern zwischen den Rückseiten (20) der Aufnahmeelemente (19) gebildet ist,
der Freiraum (21) zur Führung der Lichtwellenleiter und der Freiraum (22) zum Halten der oder jeder Leiterverbindungsstelle über an den Rückseiten (20) der Aufnahmeelemente (19) ausgebildete Abstandhalter (24) räumlich voneinander getrennt sind,
**dadurch gekennzeichnet, dass**
die Aufnahmeelemente (19) an ihren Vorderseiten (27) mehrere in einer Reihe nebeneinander positionierte, trommelartige Führungsmittel (28) für Überlängen der Lichtwellenleiter aufweisen, wobei zwischen den beiden mittleren trommelartigen Führungsmitteln (28) mindestens eines Aufnahmeelements (19), vorzugsweise jedes Aufnahmeelements, ein Durchbruch (29) zwischen der Vorderseite (27) und der Rückseite (20) des jeweiligen Aufnahmeelements (19) ausgebildet ist, über den die Lichtwellenleiter von dem zwischen den Rückseiten (20) ausgebildeten Freiraum (21) zur Führung von Lichtwellenleitern in den Bereich der an der Vorderseite (27) des jeweiligen Aufnahmeelements (19) ausgebildeten trommelartigen Führungsmittel (28) überführbar sind,
jedes trommelartige Führungsmittel (28) jedes Aufnahmeelements (19) kreisförmige bzw. zylinderartige Führungswände (30) aufweist, die zusammen mit an der Vorderseite des jeweiligen Aufnahmeelements (19) ausgebildeten Seitenwänden (31) einen Überlängenspeicher des jeweiligen Aufnahmeelements (19) definieren,
die Führungswände (30) der beiden mittleren trommelartigen Führungsmittel (28) mindestens eines Aufnahmeelements, vorzugsweise jedes Aufnahmeelements, zwischen denen der Durchbruch (29) ausgebildet ist, durch Führungsschlitze (32) für die Lichtwellenleiter unterbrochen sind, um Lichtwellenleiter ausgehend von dem zwischen den Rückseiten (20) ausgebildeten Freiraum (21) zur Führung von Lichtwellenleitern gestuft dem Überlängenspeicher des jeweiligen Aufnahmeelements (19) zuzuführen.

2. Vorrichtung nach Anspruch 1, **dadurch gekennzeichnet, dass** die Aufnahmeelemente (19) an ihren Rückseiten (20) Verbindungselemente (23) aufweisen, über welche die Rücken an Rücken positionierten Aufnahmeelemente (19) verbunden sind, nämlich einerseits unter Ausbildung des Freiraums (21) zur Führung der Lichtwellenleiter und andererseits unter Ausbildung des Freiraums (22) zum Halten der oder jeder Leiterverbindungsstelle zwischen Lichtwellenleitern.

3. Vorrichtung nach Anspruch 2, **dadurch gekennzeichnet, dass** die Verbindungselemente (23) auf den Aufnahmeelementen (19), die Rücken an Rücken positioniert sind, zusammengesteckt sind.

4. Vorrichtung nach einem der Ansprüche 1 bis 3, **dadurch gekennzeichnet, dass** der Freiraum (22) zum Halten der oder jeder Leiterverbindungsstelle in zwei Teilräume (25, 26) unterteilt ist, die in Längsrichtung gesehen den Freiraum (21) zur Führung der Lichtwellenleiter einschließen.

5. Vorrichtung nach einem der Ansprüche 1 bis 4, **dadurch gekennzeichnet, dass** sich die Seitenwände (31), die zusammen mit den Führungswänden (30) der Führungsmittel (28) den Überlängenspeicher des jeweiligen Aufnahmeelements (19) definieren, entlang von Längsseiten des jeweiligen Aufnahmeelements (19) erstrecken und entlang von Schmalseiten desselben unterbrochen sind.

6. Vorrichtung nach Anspruch 5, **dadurch gekennzeichnet, dass** die Lichtwellenleiter über die Schmalseiten ausgehend von dem an der Vorderseite des jeweiligen Aufnahmeelements ausgebildeten Überlängenspeicher in den zwischen den Rückseiten (20) ausgebildeten Freiraum (22) zum Halten der oder jeder Leiterverbindungsstelle zwischen Lichtwellenleitern überführbar sind.

7. Vorrichtung nach einem der Ansprüche 1 bis 6, **gekennzeichnet durch** ein Zugentlastungselement (33) für die Lichtwellenleiter führende Lichtwellenleiterkabel, wobei das Zugentlastungselement (33) zwischen den Rücken an Rücken positionierten Aufnahmeelementen (19) angeordnet ist.

8. Vorrichtung nach Anspruch 7, **dadurch gekennzeichnet, dass** das Zugentlastungselement (33) in dem zwischen den Rücken an Rücken positionierten Aufnahmeelementen ausgebildeten Freiraum (21) zur Führung von Lichtwellenleitern angeordnet ist.

## Revendications

1. Dispositif pour prendre en charge au moins un point de raccordement de fibres entre des fibres optiques et des surplus de longueur des fibres optiques, comportant un boîtier dans lequel est placée une réserve de surplus de longueur et dans lequel est placé un support de points de raccordement, la réserve de surplus de longueur et le support de points de raccordement étant tous deux formés ensemble à partir d'au moins deux pièces de gestion (19), les pièces de gestion (19) étant placées leur côté arrière (20) dos-à-dos, dans lequel :
un espace libre (21) est formé entre les côtés arrière (20) des pièces de gestion (19) pour guider des fibres optiques entre les côtés arrière (20) des pièces de gestion (19),
un autre espace libre (22) est formé entre les côtés arrière (20) des pièces de gestion (19) pour contenir au moins un point de raccordement de fibres entre des fibres optiques,
l'espace libre (21) pour guider les fibres optiques et l'espace libre (22) pour contenir le ou chaque point de raccordement de fibres sont séparés spatialement l'un de l'autre par des espaceurs (24) formés sur les côtés arrière (20) des pièces de gestion (19), **caractérisé en ce que**
les pièces de gestion (19) présentent, sur leur côté avant (27), une pluralité de moyens de guidage du type fût (28) pour des surplus de longueur des fibres optiques placés l'un à côté de l'autre en formant une rangée, une ouverture (29) formée entre les deux moyens de guidage du type fût du milieu (28) d'au moins une pièce de gestion (19), de préférence de chaque pièce de gestion, permettant d'amener, entre le côté avant (27) et le côté arrière (20) de la pièce de gestion respective (19), les fibres optiques depuis l'espace libre (21), formé entre les côtés arrière (20), pour guider les fibres optiques dans la région des moyens de guidage du type fût (28) formés sur le côté avant (27) de la pièce de gestion respective (19),
chaque moyen de guidage du type fût (28) de chaque pièce de gestion (19) présente des parois de guidage circulaires ou du type cylindre (30) qui, conjointement avec des parois latérales (31) formées sur le côté avant de la pièce de gestion respective (19), définissent une réserve de surplus de longueur de la pièce de gestion respective (19),
les parois de guidage (30) des deux moyens de guidage du type fût du milieu (28) d'au moins une pièce de gestion, de préférence de chaque pièce de gestion, entre lesquels est formée l'ouverture (29) sont interrompues par des fentes de guidage (32) pour les fibres optiques pour permettre, en partant de l'espace libre (21) formé entre les côtés arrière (20) pour guider des fibres optiques, d'introduire d'une manière échelonnée des fibres optiques dans la réserve de surplus de longueur de la pièce de gestion respective (19).

2. Dispositif selon la revendication 1, **caractérisé en ce que** les pièces de gestion (19) présentent, sur leur côté arrière (20), des éléments de raccordement (23) par lesquels les pièces de gestion (19) placées dos-à-dos se raccordent, plus précisément en formant, d'une part, l'espace libre (21) pour guider les fibres optique, et, d'autre part, l'espace libre (22) pour contenir le ou chaque point de raccordement de fibres entre des fibres optiques.

3. Dispositif selon la revendication 2, **caractérisé en ce que** les éléments de raccordement (23) sur lesquels les pièces de gestion (19) placées dos-à-dos s'enfichent.

4. Dispositif selon l'une des revendications 1 à 3, **caractérisé en ce que** l'espace libre (22) pour contenir le ou chaque point de raccordement de fibres est subdivisé en deux sous-espaces (25, 26) qui, vus selon une direction longitudinale, renferment l'espace libre (21) pour guider les fibres optiques.

5. Dispositif selon l'une des revendications 1 à 4, **caractérisé en ce que** les parois latérales (31) qui, conjointement avec les parois de guidage (30) des moyens de guidage (28), définissent la réserve de surplus de longueur de la pièce de gestion respective (19) s'étendent le long de côtés longitudinaux de la pièce de gestion respective (19) et sont interrompus le long de côtés étroits de celle-ci.

6. Dispositif selon la revendication 5, **caractérisé en ce qu'**il est possible d'amener les fibres optiques, par les côtés étroits, en partant de la réserve de surplus de longueur formée sur le côté avant de la pièce de gestion respective, dans l'espace libre (22), formé entre les côtés arrière (20), pour contenir le ou chaque point de raccordement de fibres entre des fibres optiques.

7. Dispositif selon l'une des revendications 1 à 6, **caractérisé par** un élément de décharge de traction (33) pour des câbles à fibres optiques guidant les fibres optiques, l'élément de décharge de traction (33) étant agencé entre les pièces de gestion (19) placées dos-à-dos.

8. Dispositif selon la revendication 7, **caractérisé en ce que** l'élément de décharge de traction (33) est agencé dans l'espace libre (21), formé entre les pièces de gestion placées dos-à-dos, pour guider des fibres optiques.
